# EUROPEAN PATENT APPLICATION

(11) **EP 4 583 227 A1**
(43) Date of publication of application: **09.07.2025**
(21) Application number: 23868280.1
(22) Date of filing: 22.09.2023
(51) Int. Cl.: H01M 10/056, H01B 1/06, H01M 10/052, H01M 10/054

(54) **COATING MATERIAL FOR BATTERY MEMBER, ELECTROLYTE, BATTERY, AND COATING AGENT FOR BATTERY MEMBER**

(30) Priority: 22.09.2022 JP 2022151830
(71) Applicant: Sumitomo Chemical Company, Limited, Tokyo 103-6020 (JP); Kyoto University, Kyoto-shi, Kyoto 606-8501 (JP)
(72) Inventor: SUWA Koki, Niihama-shi, Ehime 792-8521 (JP); NAKAJIMA Hideto, Niihama-shi, Ehime 792-8521 (JP); OUCHI Makoto, Kyoto-shi, Kyoto 606-8501 (JP); YAMADA Izumi, Kyoto-shi, Kyoto 606-8501 (JP)
(74) Representative: Vossius & Partner Patentanwälte Rechtsanwälte mbB
(86) International application number: PCT/JP2023/034485
(87) International publication number: WO 2024/063159

(57) **Abstract**

A coating material for a battery member contains a polymer having an ability to preferentially conduct metal ions.

## Description

### Technical Field

The present disclosure relates to a coating material for a battery member, an electrolyte, a battery, and a coating agent for a battery member.

### Background Art

Batteries such as lithium ion batteries that perform charge and discharge in accordance with movement of metal ions between a positive electrode and a negative electrode are actively studied because of their high capacity. As an electrolyte for a lithium ion battery or the like, a solution of a lithium salt containing an organic solvent or an ionic liquid is known, and a solid electrolyte has been studied from the viewpoint of safety and processability (Patent Literatures 1 and 2 and Non Patent Literature 1). As the solid electrolyte, various kinds of compounds such as an oxide-based solid electrolyte and a sulfide-based solid electrolyte are known.

### Citation List

### Patent Literature

Patent Literature 1: Chinese Patent Application Laid-Open Publication No. 112448100
Patent Literature 2: Chinese Patent Application Laid-Open Publication No. 110247111

### Non Patent Literature

Non Patent Literature 1: Journal of The Electrochemical Society, 2020, 167, 070559.

### Summary of Invention

### Technical Problem

Here, many of the constituent members of a battery such as a solid electrolyte are poor in resistance to electrochemical reactions such as oxidation and reduction, and there is a problem in that a degree of freedom in combination of the respective members is poor.

The present disclosure has been made in view of the above circumstances, and an object of the present disclosure is to provide a coating material capable of improving electrochemical resistance of a battery member. Another object of the present disclosure is to provide an electrolyte or battery including such a coating material, and a coating agent for a battery member capable of forming such a coating material.

### Solution to Problem

The present disclosure includes the following embodiments [1] to [13].
[1] A coating material for a battery member containing a polymer having an ability to preferentially conduct metal ions.
[2] The coating material for a battery member according to [1], in which the coating material is for coating an ion conductive inorganic solid electrolyte.
[3] The coating material for a battery member according to [2], in which the ion conductive inorganic solid electrolyte reacts in a potential range of -0.1 to 4.5 V based on Li/Li⁺.
[4] The coating material for a battery member according to [2] or [3], in which the ion conductive inorganic solid electrolyte is particles.
[5] The coating material for a battery member according to any one of [2] to [4], in which the ion conductive inorganic solid electrolyte has a sheet shape.
[6] The coating material for a battery member according to any one of [1] to [3], further containing a swelling agent.
[7] The coating material for a battery member according to [6], in which the swelling agent is at least one of an organic solvent and an ionic liquid.
[8] The coating material for a battery member according to any one of [1] to [7], in which the polymer contains at least one of an anionic functional group having a metal ion as a counter cation and a functional group having an anion scavenging ability.
[9] The coating material for a battery member according to any one of [1] to [8], in which the coating material is stabilized in a potential range of - 0.1 to 4.5 V based on Li/Li⁺.
[10] An electrolyte containing the coating material for a battery member according to any one of [1] to [9].
[11] A coated electrolyte containing: an electrolyte; and a coating material for a battery member covering at least a part of a surface of the electrolyte, in which the coating material for a battery member contains a polymer having an ability to preferentially conduct metal ions.
[12] A battery including: the coating material for a battery member according to any one of [1] to [9]; the electrolyte according to [10]; or the coated electrolyte according to [11].
[13] A coating agent for a battery member containing a polymer having an ability to preferentially conduct metal ions.

### Advantageous Effects of Invention

According to the present disclosure, it is possible to provide a coating material capable of improving electrochemical resistance of a battery member.

### Brief Description of Drawings

FIG. 1 is a diagram showing a result of a cycle test for a cell using an electrolyte composition of Example 1.
FIG. 2 is a diagram showing a result of a cycle test for a cell using an electrolyte composition of Comparative Example 1.
FIG. 3 is a diagram showing a result of a cycle test for a cell using an electrolyte composition of Example 2.
FIG. 4 is a diagram showing a result of a cycle test for a cell using an electrolyte composition of Example 3.

### Description of Embodiments

A coating material for a battery member of the present embodiment contains a polymer having an ability to preferentially conduct metal ions. A coating material for a battery member of the present embodiment can be formed using a coating agent for a battery member containing a polymer having an ability to preferentially conduct metal ions.

The coating material for a battery member of the present embodiment can enhance electrochemical resistance of the battery member. Therefore, for example, the coating material can be applied to an electrolyte of a battery. More specifically, a surface of an ion conductive inorganic solid electrolyte contained in an electrolyte is coated with the coating material for a battery member, and the electrochemical resistance of the ion conductive inorganic solid electrolyte can be enhanced.

The coating material for a battery member may cover a surface of each particle of the ion conductive inorganic solid electrolyte contained in the electrolyte, and for example, may cover the surface of the electrolyte formed in a sheet shape, a cylindrical shape, or the like.

The coating agent for a battery member of the present embodiment may contain an ion conductive inorganic solid electrolyte, a swelling agent, and the like as optional components, in addition to a polymer having an ability to preferentially conduct metal ions. When the ion conductive inorganic solid electrolyte is contained in the coating agent for a battery member, the particles of the ion conductive inorganic solid electrolyte are contained in the form of being dispersed in the coating agent for a battery member, such that the particles of the ion conductive inorganic solid electrolyte can be coated with the coating agent for a battery member in advance, and can be used as an electrolyte composition for forming an electrolyte.

### [Polymer Having Ability to Preferentially Conduct Metal Ions]

As the polymer (hereinafter, also simply referred to as a polymer) having the ability to preferentially conduct metal ions, for example, when a transport number of metal ions is measured for at least one of the following compositions (A) and (B) at room temperature (25°C), the transport number of metal ions may be 0.4 or more, 0.5 or more, 0.6 or more, or 0.7 or more.
Composition (A) containing 33 mass% of the polymer and 67 mass% of a nonionic plasticizer
Composition (B) containing 31.9 mass% of the polymer and the remaining total amount of a metal salt and a nonionic plasticizer, and having a metal ion concentration of 0.3 mol/L

When the transport number of metal ions is measured for a composition containing 33 mass% of the polymer and having a metal ion concentration of 1.0 mol/l or a composition containing 31.9 mass% of the polymer and 4.3 mass% of a metal salt and having a metal ion concentration of 0.71 mol/l, the transport number of metal ions may be 0.4 or more, 0.5 or more, 0.6 or more, or 0.7 or more. When the polymer contains an anionic functional group, the metal ion contained in the composition may be a counter cation of the anionic functional group, or may be added as a metal salt. The polymer having the ability to preferentially conduct metal ions may be a polymer having an ability to preferentially conduct alkali metal ions. Examples of the nonionic plasticizer include at least one of an organic solvent and other resins such as a fluorine-based resin. The organic solvent may be an aprotic solvent. The aprotic solvent may be at least one selected from the group consisting of a carbonate-based solvent, a fluorine-based solvent, and an ether-based solvent. The fluorine-based resin is preferably a resin having a carbon chain as a main chain. The carbon chain may be formed by radical polymerization of an ethylenically unsaturated group. The fluorine-based resin may be poly(vinylidene fluoride-co-hexafluoropropylene) (PVDF-HFP).

Specific examples of the organic solvent may be specific examples of an organic solvent contained in an electrolyte composition described below. The organic solvent may be a mixed solvent containing ethylene carbonate and propylene carbonate in a volume ratio of 1:1.

A concentration of the metal ions may be prepared by adding a metal salt. For example, when the metal salt is an alkali metal salt, the alkali metal salt is not particularly limited, and examples thereof include MF, MCl, MBr, MI, MClO₄, MPF₆, MBF₄, M₂SO₄, M[(CₕF₂ₕ₊₁)SO₃] (h is 0 to 3), and M[(CₕF₂ₕ₊₁)SO₂]₂N (h is 0 to 3), where M is the alkali metal. When the polymer contains a structural unit (A), M may be the same alkali metal element as the alkali metal element of the structural unit (A).

Examples of the polymer having the ability to preferentially conduct metal ions include a polymer containing at least one of an anionic functional group having a metal ion as a counter cation (also referred to as a functional group (A)) and a functional group having an anion scavenging ability (also referred to as a functional group (B)). A structure of the polymer is not particularly limited, and examples thereof include a structure having a carbon chain as a main chain, and the carbon chain may be formed by radical addition polymerization of a monomer having an ethylenically unsaturated group.

The metal ion, which is a counter cation of the functional group (A), may be at least one of an alkali metal ion and an alkaline earth metal ion, and may be an alkali metal ion. Examples of the alkali metal ion include a lithium ion, a sodium ion, a potassium ion, a rubidium ion, and a cesium ion, and the alkali metal ion may be a lithium ion, a sodium ion, or a potassium ion, may be a lithium ion or a sodium ion, or may be a lithium ion. Hereinafter, a structural unit containing a functional group (A) and a metal ion that is a counter cation of the functional group (A) is also referred to as a structural unit (A). The structural unit (A) may have a structure obtained by radical addition polymerization of a monomer having an ethylenically unsaturated group. The metal ion, which is the counter cation of the functional group (A), may be the same alkali metal ion as the alkali metal ion contained in the ion conductive inorganic solid electrolyte.

The structural unit (A) may have, as the functional group (A), at least one selected from the group consisting of a conjugated anion of a sulfonylimide group, a conjugated anion of a sulfonate group, and a conjugated anion of a phenolic hydroxyl group. The conjugated anion of the sulfonylimide group, the conjugated anion of the sulfonate group, and the conjugated anion of the phenolic hydroxyl group may be contained in, for example, a group having a conjugated anion of the sulfonylimide group, a group having a conjugated anion of the sulfonate group, and a group having a conjugated anion of the phenolic hydroxyl group, which will be described below.

The group having a sulfonylimide group may be contained in the structural unit (A) represented by the following formula (A1). 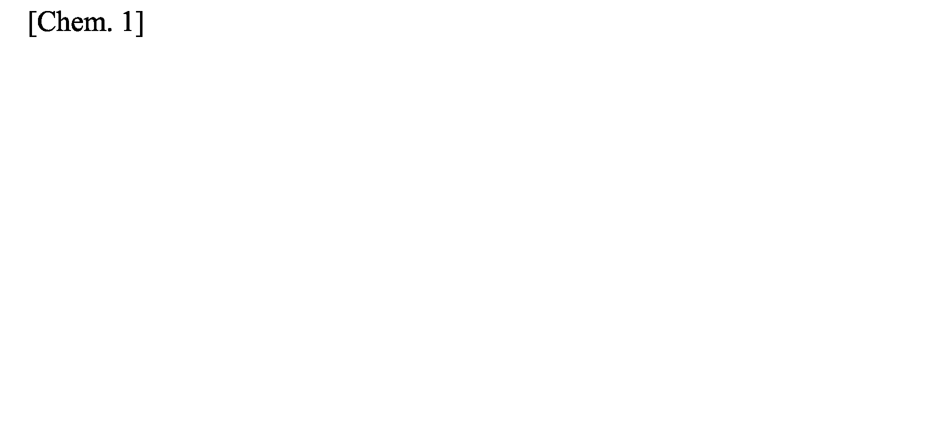 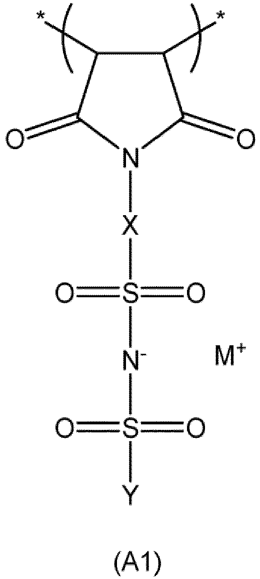 (In formula (A1), X is a divalent organic group having 1 to 20 carbon atoms, Y is a halogen atom or a monovalent organic group having 1 to 20 carbon atoms, M⁺ is an alkali metal ion, and * represents a position at which a structural unit (A1) is bonded to another structural unit).

X is not particularly limited, and may be a hydrocarbon group, a group having a hetero atom, or a heterocyclic ring. More specific examples of X include a divalent group such as a hydrocarbon group and a group having a chemical structure in which one or more carbon atoms (methylene groups) in the hydrocarbon group are substituted with a linking group of -O-, -S-, -C(=O)-, or -C(=O)O-. Note that, when there are a plurality of linking groups, the linking groups are not adjacent to each other. In addition, the divalent group may have a substituent that substitutes for a hydrogen atom bonded to a carbon atom. The substituent may be a monovalent substituent, and examples thereof include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. X may be bonded to one or both of a nitrogen atom of a maleimide group and a sulfur atom of a sulfonyl group by a carbon atom of X.

The number of carbon atoms of X may be 1 to 15, 2 to 10, or 3 to 8. X may be a group having an aromatic ring, or may be a group having an aromatic carbocyclic ring such as a benzene ring. A substituent such as an alkyl group, a halogen atom, or an electron-withdrawing group may be bonded to a carbon atom which is a ring member of the carbocyclic ring. The hydrocarbon group as X is preferably a phenylene group, an alkylene group having 1 to 8 carbon atoms, a polyoxyalkylene group, or a group in which some or all of hydrogen atoms bonded to carbon atoms of these groups are substituted with a halogen atom such as a fluorine atom, and more preferably a phenylene group or a substituted phenylene group substituted with an alkyl group, a halogen atom, an electron-withdrawing group, or the like. Examples of the electron-withdrawing group include a halogen atom, a sulfonic acid group or a salt thereof, a sulfonic acid ester, a nitro group, and a nitrile group.

In formula (A1), when Y is a monovalent organic group, the organic group is not particularly limited, and may be a hydrocarbon group, a group having a hetero atom, or a heterocyclic group. More specific examples of Y include a monovalent group such as a hydrocarbon group and a group having a chemical structure in which one or more carbon atoms (methylene groups) in the hydrocarbon group are substituted with a linking group of -O-, -S-, -C(=O)-, or -C(=O)O-. Note that, when there are a plurality of linking groups, the linking groups are not adjacent to each other. In addition, the monovalent group may have a substituent that substitutes for a hydrogen atom bonded to a carbon atom. The substituent may be a monovalent substituent, and examples thereof include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group.

The number of carbon atoms of Y may be 1 to 15, 1 to 10, 1 to 8, 1 to 5, or 1 to 3. The hydrocarbon group as Y is preferably a phenyl group, an alkyl group having 1 to 5 carbon atoms, or a group in which some or all of hydrogen atoms bonded to carbon atoms of these groups are substituted with a halogen atom such as a fluorine atom, more preferably a fluorinated alkyl group having 1 to 5 carbon atoms, and still more preferably a fluorinated alkyl group having 1 to 3 carbon atoms such as a trifluoromethyl group. The fluorinated alkyl group may be a perfluorinated alkyl group. When Y is a halogen atom, the halogen atom is preferably a fluorine atom or a chlorine atom, and more preferably a fluorine atom.

In formula (A1), M⁺ is an alkali metal ion, preferably a lithium ion (Li⁺), a sodium ion (Na⁺), or a potassium ion (K⁺), and more preferably a lithium ion. M⁺ may contain two or three ions of Li⁺, Na⁺, and K⁺, and preferably contains substantially only a single ion.

The group having a conjugated anion of a phenolic hydroxyl group is a group having a group in which a hydroxyl group (that is, a phenolic hydroxyl group (-OH)) directly bonded to an aromatic ring is alkali metallized (that is, M is a -OM group as an alkali metal).

The structural unit (A) may be a group represented by the following formula (A2). 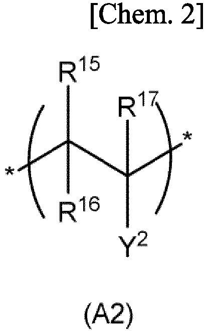 (In formula (A2), Y² represents a group having an alkali metallized phenolic hydroxyl group or a group having a conjugated anion of sulfonic acid, and * represents a binding site of the structural unit (A2) to another structural unit, R¹⁵ to R¹⁷ are each independently a hydrogen atom or a monovalent substituent, or R¹⁶ is a hydrogen atom or a monovalent substituent, and R¹⁵ and R¹⁷ together form a divalent substituent.)

One or more of R¹⁵ to R¹⁷ may be a hydrogen atom, or may be all hydrogen atoms.

When R¹⁵ to R¹⁷ are monovalent substituents, the monovalent substituent may be a monovalent organic group. The number of carbon atoms of the organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent substituent may have a substituent that substitutes for a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methyl group, an ethyl group, a propyl group, and a phenyl group.

For R¹⁵ to R¹⁷, the monovalent substituent may have an electron-withdrawing group, or may be an electron-withdrawing group itself. The electron-withdrawing group may be bonded to the monovalent organic group, and the monovalent organic group may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

When R¹⁵ and R¹⁷ together form a divalent organic group, the number of carbon atoms of the divalent organic group may be 1 to 20, 1 to 15, 1 to 10, 1 to 5, or 1 to 3. Examples of the organic group include a divalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or - C(=O)O-. In addition, the divalent organic group may have a substituent that substitutes for a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a propylene group and a butylene group.

When Y² is a group having a phenolic hydroxyl group, Y² may be a group represented by any one of the following formulas (A21) to (A26). 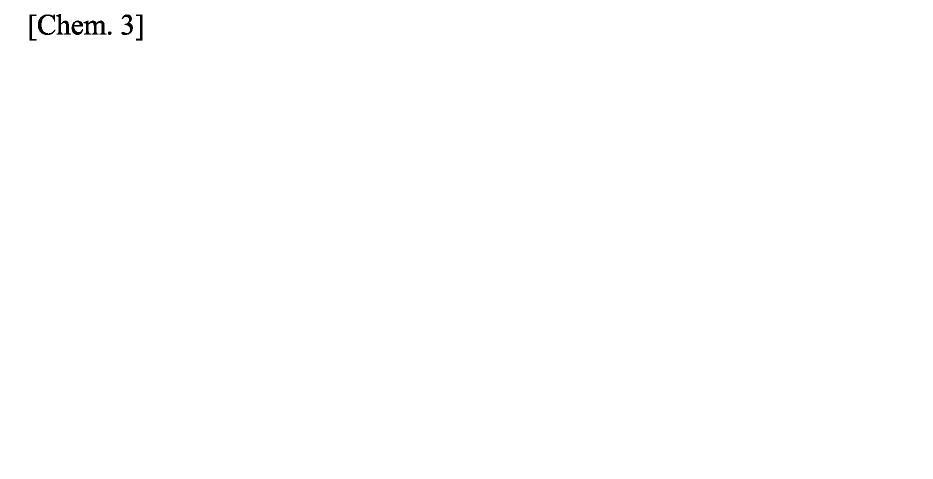 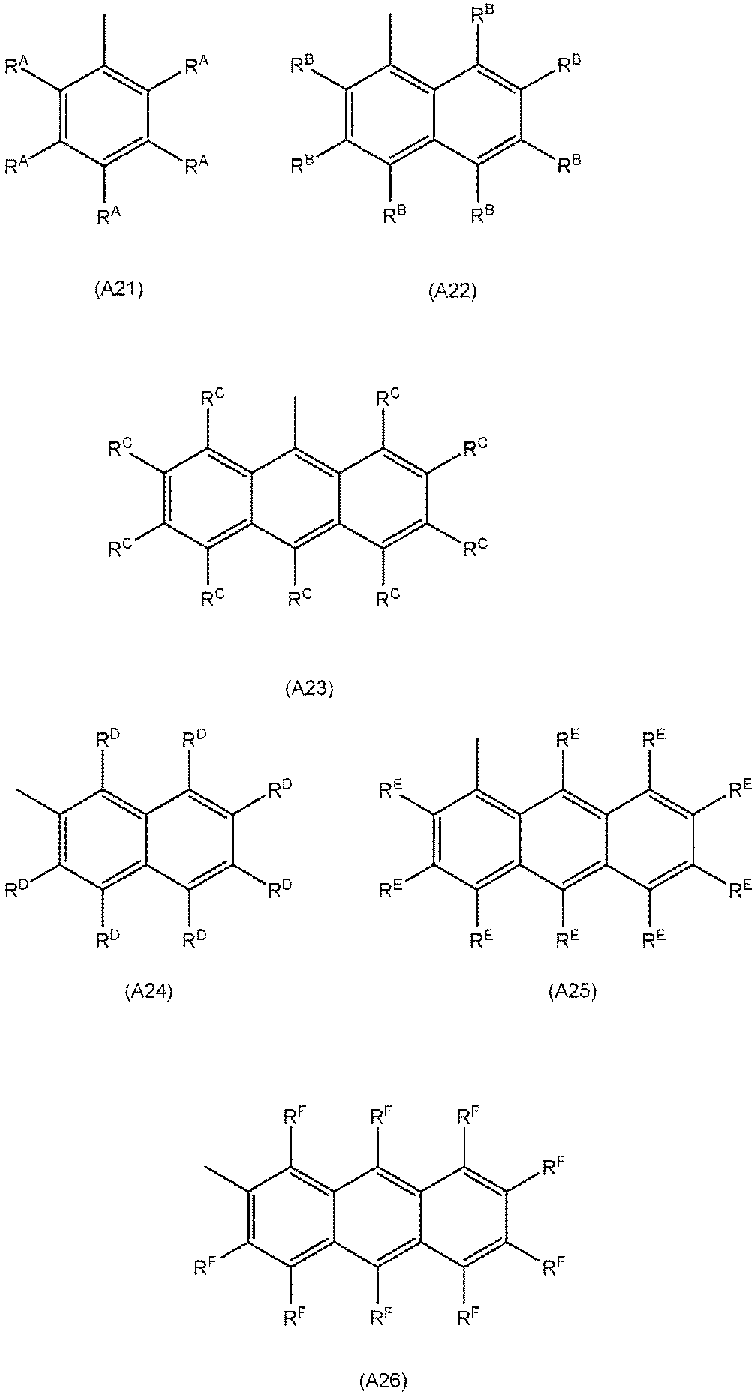 (In formula (A21), at least one of R^{A} groups is a -OM group, the rest is a hydrogen atom or a monovalent substituent, and M is an alkali metal element, and may be Li, Na, or K, in formula (A22), at least one of R^{B} groups is a -OM group, the rest is a hydrogen atom or a monovalent substituent, and M is an alkali metal element, and may be Li, Na, or K, in formula (A23), at least one of R^{C} groups is a -OM group, the rest is a hydrogen atom or a monovalent substituent, and M is an alkali metal element, and may be Li, Na, or K, in formula (A24), at least one of R^{D} groups is a -OM group, the rest is a hydrogen atom or a monovalent substituent, and M is an alkali metal element, and may be Li, Na, or K, in formula (A25), at least one of R^{E} groups is a -OM group, the rest is a hydrogen atom or a monovalent substituent, and M is an alkali metal element, and may be Li, Na, or K, and in formula (A26), at least one of R^{F} groups is a -OM group, the rest is a hydrogen atom or a monovalent substituent, and M is an alkali metal element, and may be Li, Na, or K.)

When the polymer contains a functional group of formula (A21), in the benzene ring of formula (A21), a -OM group may be bonded to the para position as viewed from the binding site between the functional group of formula (A21) and the polymer. In addition, the R^{A3} group may be a -OA group. A hydrogen atom, a -OA group, a methyl group, an ethyl group, and a monovalent organic group having 1 to 20 carbon atoms (where in a case where the monovalent organic group is a saturated hydrocarbon group, the monovalent organic group is a methyl group, an ethyl group, or a group having 6 to 20 or 6 to 15 carbon atoms, and in a case where the monovalent organic group is an alkoxy group, the monovalent organic group is a group having 4 to 20 or 4 to 15 carbon atoms) may be independently bonded to the meta position or the ortho position and the meta position as viewed from the binding site.

The groups represented by formulas (A21) to (A26) may have one to three -OM groups, may have one or two -OM groups, and may have one -OM group.

In formulas (A21) to (A26), the monovalent substituent is preferably an electron-withdrawing group. Examples of the electron-withdrawing group include a halogen atom, a sulfonic acid group or a salt thereof, a sulfonic acid ester, a nitro group, and a nitrile group. The halogen atom may be any of F, Cl, Br, and I.

In addition, in formulas (A21) to (A26), the monovalent substituent may be an organic group having 1 to 20 carbon atoms. The number of carbon atoms of the organic group may be 1 to 15, 1 to 10, 1 to 5, or 1 to 3. Examples of the organic group include a monovalent group such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent group may have a substituent that substitutes for a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methyl group, an ethyl group, a propyl group, and a phenyl group. Note that the monovalent organic group itself may be an electron-withdrawing group.

When Y² is a group having a conjugated anion of a sulfonic acid, examples of Y² include a group represented by the following formula (A3). 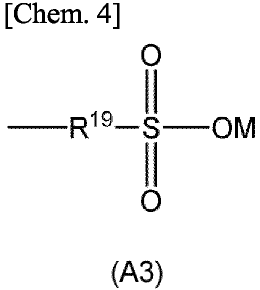 (In formula (A3), R¹⁹ is a covalent bond or a divalent organic group, and M is an alkali metal element and may be Li, Na, or K.)

In formula (A3), the number of carbon atoms of the divalent organic group may be 1 to 20, 1 to 15, 1 to 10, 1 to 5, or 1 to 3. Examples of the organic group include a divalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the divalent organic group may have a substituent that substitutes for a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methylene group and a phenylene group.

Examples of the group having a conjugated anion of a sulfonic acid include -SO₃M, -CH₂-SO₃M, and -C₆H₄-SO₃M.

The functional group (B) is a functional group having a function as an anion receptor. The anion receptor refers to a chemical species that captures an anion by forming an electrostatic interaction, a hydrogen bond, an acid-base complex, or the like with the anion. The functional group (B) captures the counter anion of the metal ion in the metal salt and promotes dissociation between the counter anion and the metal ion. This increases the mobility of the metal ions. In addition, since the counter anion is captured by the polymer via the structural unit (B), the mobility of the counter anion decreases. As a result, it is considered that the transport number of metal ions is improved. In addition, since the mobility of the metal ions increases, the conductivity of the metal ions tends to be improved.

Low molecular weight chemical species (compounds and the like) that function as anion receptors are known, and examples thereof include compounds described in US Patent No. 6,022,643, US Patent No. 5,705,689, US Patent No. 6,120,941, and the like. The functional group (B) has a structure corresponding to a chemical species that functions as an anion receptor. Since the functional group is immobilized on the polymer, the captured anion can be immobilized on the structure of the polymer unlike a conventional low molecular weight anion receptor. Therefore, it is considered that it is possible to more effectively suppress the participation of the anion in the current due to the movement.

Note that the counter anion of the alkali metal salt is not necessarily a completely ionized free anion when being captured by the functional group, and may be captured by interacting with the functional group in a state of forming an ionic bond or an ionic pair with a metal ion.

The functional group having a function as an anion receptor may have Lewis acidity. In this case, the functional group can capture an anion by accepting a non-covalent electron pair of anions and forming an acid-base complex. Examples of such a functional group include a functional group having an electron-deficient atom. Note that the electron-deficient atom refers to an atom that is covalently bonded to another atom but has no octet formed by the outermost electron of the atom. Examples of the electron-deficient atom include atoms belonging to group 13 of the periodic table, and more specifically, may be at least one of aluminum and boron, or may be boron.

In addition, the functional group having a function as an anion receptor may be a group having an azaether moiety. The group having an azaether moiety is a group having an azaether compound as a substituent, and the azaether compound is a compound in which -O- of an ether compound is substituted with -NR^{E}- (where R^{E} is a hydrogen atom or an organic group). The azaether moiety may be either a linear azaether moiety or a cyclic azaether moiety and may have both a linear azaether moiety and a cyclic azaether moiety. The group having an azaether moiety may have an electron-withdrawing group in, for example, a hydrocarbon moiety.

The functional group (B) may be contained, for example, in the structural unit (B) represented by formula (B). 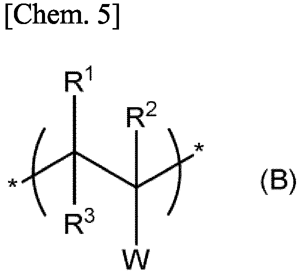 (In formula (B), W represents a functional group having a function as an anion receptor, R¹ to R³ each independently represent a hydrogen atom or a monovalent substituent, or R³ represents a hydrogen atom or a monovalent substituent, and R¹ and R² together form a divalent organic group, and * represents a position at which the structural unit (B) is bonded to another structural unit.)

The polymer having the ability to preferentially conduct metal ions may contain one or two or more structural units represented by formula (B).

One or more of R¹ to R³ may be a hydrogen atom, or may be all hydrogen atoms. W may be a group represented by the following formula (B1).

When R¹ to R³ are monovalent substituents, the monovalent substituent may be a monovalent organic group. The number of carbon atoms of the organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent substituent may have a substituent that substitutes for a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methyl group, an ethyl group, a propyl group, and a phenyl group.

Note that, in the present specification, the aromatic hydrocarbon group is a group having an aromatic moiety, and may have an aliphatic moiety. In addition, in the present specification, the cyclic hydrocarbon group is a group having a cyclic hydrocarbon moiety, and may have a linear or branched hydrocarbon moiety.

The monovalent substituent may have an electron-withdrawing group, or may be an electron-withdrawing group itself. The electron-withdrawing group may be bonded to the monovalent organic group, and the monovalent organic group may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

When R¹ and R² together form a divalent organic group, the number of carbon atoms of the divalent organic group may be 1 to 20, 1 to 15, 1 to 10, 1 to 5, or 1 to 3. Examples of the organic group include a divalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or - C(=O)O-. In addition, the divalent organic group may have a substituent that substitutes for a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a propylene group and a butylene group.

W preferably has a group represented by formula (B1). 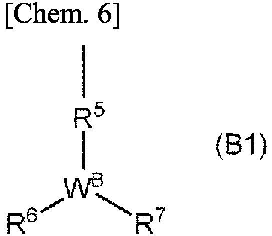 (In formula (B1), W^{B} is an atom belonging to group 13 of the periodic table, R⁵ is a covalent bond or a divalent organic group, and each of R⁶ and R⁷ is a hydrogen atom, a -OH group, a halogen atom, or a monovalent organic group, or together form a divalent organic group, and R⁶ and R⁷ may be the same group or different groups.)

W^{B} may be at least one of aluminum and boron, or may be boron.

When R⁵ is a divalent organic group, the number of carbon atoms of the divalent organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the divalent organic group may have a substituent that substitutes for a hydrogen atom bonded to a carbon atom. The substituent may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom. R⁵ may be a hydrocarbon group, a halogen-substituted hydrocarbon group, or a group in which a hydrocarbon group or a halogen-substituted hydrocarbon group is bonded to W^{B} via an ether bond. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group. R⁵ may be a covalent bond.

When R⁶ or R⁷ is a halogen atom, R⁶ or R⁷ may be any of a fluorine atom, a chlorine atom, a bromine atom, and an iodine atom, and a fluorine atom is preferable.

When R⁶ or R⁷ is a monovalent organic group, the number of carbon atoms of the monovalent organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or - C(=O)O-. In addition, the monovalent organic group may have a substituent that substitutes for a hydrogen atom bonded to a carbon atom. The substituent may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom. R⁶ or R⁷ may be a hydrocarbon group, a halogen-substituted hydrocarbon group, or a group in which a hydrocarbon group or a halogen-substituted hydrocarbon group is bonded to W^{B} via an ether bond. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group.

W may be a group represented by formula (B1a) or a group represented by formula (B1b). 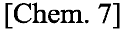 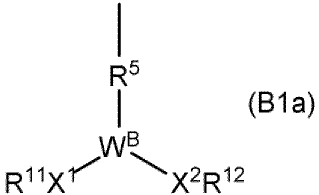 (In formula (B1a), each of X¹ and X² is an oxygen atom (ether bond) or a covalent bond, each of R¹¹ and R¹² is a halogen atom, a monovalent hydrocarbon group, a hydrogen atom, or a monovalent halogen-substituted hydrocarbon group, and may be a halogen atom (excluding a case where X is an oxygen atom), a monovalent hydrocarbon group, or a monovalent halogen-substituted hydrocarbon group, and at least one of R¹¹ and R¹² may be a monovalent hydrocarbon group or a monovalent halogen-substituted hydrocarbon group, and R¹¹ and R¹² may be the same group or different groups.) 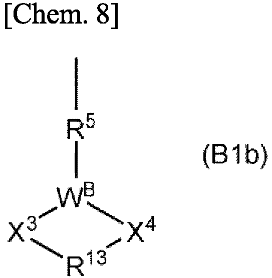 (In formula (B1b), each of X³ and X⁴ is an oxygen atom (ether bond) or a covalent bond, and R¹³ is a divalent hydrocarbon group or a divalent halogen-substituted hydrocarbon group.)

In formula (B1a), when R¹¹ is a halogen atom, X¹ may be a covalent bond, and when R¹² is a halogen atom, X² may be a covalent bond. When R¹¹ or R¹² is a monovalent hydrocarbon group or a monovalent halogen-substituted hydrocarbon group, the number of carbon atoms of the monovalent hydrocarbon group or the monovalent halogen-substituted hydrocarbon group may be 1 to 20, 1 to 15, 1 to 10, 1 to 5, or 1 to 3. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group.

R¹¹ or R¹² are each independently -F, -CH₃, -C₂H₅, -C₃H₇, -C₆H₅ (phenyl group), -C₆HₙF₅₋ₙ (n is an integer of 0 to 4 and may be an integer of 0 to 3), -CF₃, -CH₂CF₃, -CH₂CF₃F₇,-CH(CF₃)₂, -C(CF₃)₂-C₆H₅, - C(CF₃)₃, or -C₆Hₙ(CF₃)₅₋ₙ (n is an integer of 0 to 4 and may be 1 or 2.)

In formula (B1b), the number of carbon atoms of the divalent hydrocarbon group or the divalent halogen-substituted hydrocarbon group may be 1 to 20, 1 to 15, 2 to 10, or 3 to 8. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group.

Examples of R¹³ include -C₂H₄-, -C₃H₆-, -C₄H₈-, -C₅H₁₀-, -C₆H₁₂-, -C₇H₁₄-, -C₈H₁₆-, -C₉H₁₈-, and -C₁₀H₂₀-, in which these hydrogen atoms are partially or entirely substituted with fluorine. More specifically, - C(CH₃)₂-C(CH₃)₂- is preferable.

A molar ratio m of the structural unit (B) to all structural units contained in the polymer may be 0.2 to 0.8, 0.25 to 0.75, 0.3 to 0.7, 0.35 to 0.65, or 0.4 to 0.6.

A molar ratio n of the structural unit (A) to all structural units contained in the polymer may be 0.25 to 0.75, 0.3 to 0.7, 0.35 to 0.65, or 0.4 to 0.6.

There is no problem as long as the sum of m and n is 1 or less, and the sum of m and n may be 0.95 or less. In addition, the sum of m and n may be 0.5 or more, 0.6 or more, 0.7 or more, 0.8 or more, 0.9 or more, or 0.95 or more.

A content of the structural unit (A) with respect to the total mass of the polymer may be 5 to 90 mass%, 20 to 80 mass%, 40 to 75 mass%, or 55 to 70 mass%.

A content of the structural unit (B) with respect to the total mass of the polymer may be more than 10 mass% and 95 mass% or less, 15 to 95 mass%, 20 to 95 mass%, 20 to 80 mass%, 25 to 60 mass%, or 30 to 45 mass%.

The total content of the structural unit (A) and the structural unit (B) may be 50 mass% or more, 70 mass% or more, 90 mass% or more, or 95 mass% or more, with respect to the total mass of the polymer.

The polymer may contain a structural unit (C) which is a structural unit different from both the structural unit (A) and the structural unit (B). Examples of the structural unit (C) include a structural unit represented by a structural unit (C1) and a structural unit represented by a structural unit (C2) described below. 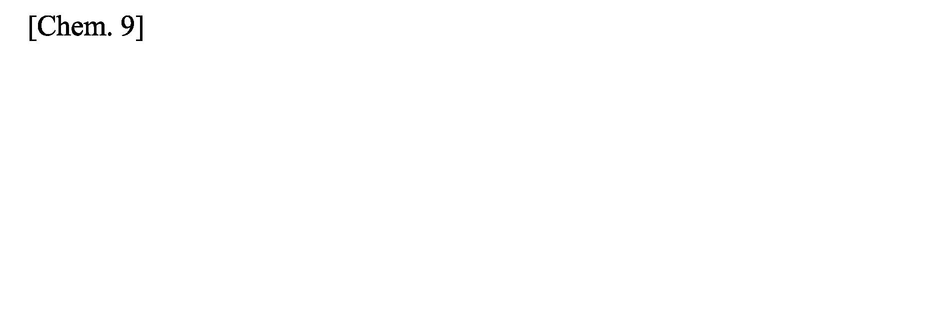 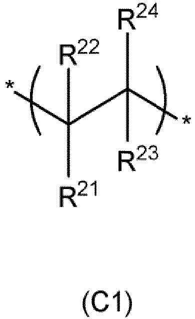 (In formula (C1), R²¹ to R²⁴ are each independently a hydrogen atom, a halogen atom, or a monovalent organic group having 1 to 20 carbon atoms, and * represents a position at which the structural unit (C1) is bonded to another structural unit.) 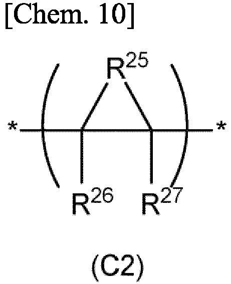 (In formula (C2), R²⁵ is a divalent organic group having 1 to 20 carbon atoms, and each of R²⁶ and R²⁷ is a hydrogen atom, a halogen atom, or a monovalent organic group having 1 to 20 carbon atoms, and R²⁵ may form a ring having an ethylene unit of formula (C2) and an imide group (succinimide ring or N-derivative thereof) or a ring having an acid anhydride group (succinic anhydride ring.)

One or two or more of R²¹ to R²⁴ may be a monovalent organic group. The monovalent organic group may be a group represented by - Z¹-R²⁹. The number of carbon atoms in each of R²¹ to R²⁴ may be 1 to 40, 1 to 20, 2 to 15, or 4 to 13. Here, Z¹ is a divalent linking group, and may be, for example, a group represented by a covalent bond, -O-, -S-, - C(=O)-, -C(=O)O-, -OC(=O)-, -C(=O)NR³⁸-, or -NR³⁹C(=O)-. When Z¹ is a covalent bond, -O-, -S-, -C(=O)-, -C(=O)O-, or -OC(=O)-, R²⁹ is a hydrogen atom or a monovalent organic group. When Z is - C(=O)NR³⁸-, each of R²⁹ and R³⁸ is a hydrogen atom or a monovalent organic group, or R²⁹ forms a ring together with R³⁸. In the case of - NR³⁹C(=O)-, each of R²⁹ and R³⁹ is a hydrogen atom or a monovalent organic group, or R²⁹ forms a ring together with R³⁹. The monovalent organic group as R²⁹, R³⁸, or R³⁹ may have 1 to 20 or 1 to 10 organic groups. When R³⁸ is a monovalent organic group, R³⁸ may be a monovalent hydrocarbon group having 1 to 20 carbon atoms. When Z¹ is a covalent bond or -C(=O)O-, R²⁹ may be a hydrogen atom or a monovalent hydrocarbon group having 1 to 20 carbon atoms. When Z¹ is a covalent bond and R²⁹ is a hydrocarbon group, the hydrocarbon group may be an aliphatic hydrocarbon group. In addition, R²⁹ may be a monovalent organic group other than a hydrocarbon group or a hydrocarbon group having a ring structure. When Z¹ is -O-, Z¹ may be a monovalent organic group other than a group represented by W-H with W as an alkyl ether. When R²⁶ to R²⁸ are monovalent organic groups, examples of the monovalent organic group include the same groups as those exemplified for R²⁵.

In addition, the structural unit (C) may include a structural unit (also referred to as a structural unit (Ap)) that is a precursor of the structural unit (A). Examples of such a structural unit include an unreacted structural unit and an intermediate structural unit which could not be converted into the structural unit (A) among the structural units (for example, a structural unit derived from a monomer (A2') described below) which are precursors of the structural unit (A), and examples thereof include a group which is a conjugated acid of the structural unit (A) (that is, an alkali metal ion which is a counter cation of the structural unit (A) is substituted with H⁺) and a group in which a counter cation of the structural unit (A) is substituted with a cation other than an alkali metal ion. Examples of the counter cation contained in the structural unit (Ap) include metal ions such as NH₄⁺, an organic ammonium cation, and an alkaline earth metal ion. The polymer may contain the structural unit (A) in an amount of 85 mol% or more, 90 mol% or more, or 95 mol% or more, with respect to the total amount of the structural unit (A) and the structural unit (Ap).

The polymer may contain a structural unit derived from a hydrocarbon compound having a plurality of ethylenically unsaturated groups such as butadiene and isoprene.

The polymer may contain a structural unit derived from a crosslinking agent. Examples of the crosslinking agent include compounds having a plurality of ethylenically unsaturated groups in the molecule, such as hexanediol diacrylate, pentaerythritol tetraacrylate, divinylbenzene, and triethylene glycol divinyl ether.

A number average molecular weight (Mn) of the polymer may be 5,000 to 200,000, 8,000 to 120,000, or 10,000 to 100,000. A weight average molecular weight (Mw) of the polymer may be 5,000 to 300,000, 10,000 to 250,000, or 20,000 to 100,000. A molecular weight distribution (Mw/Mn) of the polymer may be 1.0 to 3.5 or 1.3 to 2.7. The number average molecular weight and the weight average molecular weight of the polymer can be measured by, for example, gel permeation chromatography.

A content of the polymer in the coating agent for a battery member may be 4 mass% or more, 10 mass% or more, 20 mass% or more, or 30 mass% or more, with respect to the total amount of the coating agent for a battery member. In addition, the content of the polymer in the coating agent for a battery member may be 90 mass% or less, 80 mass% or less, 60 mass% or less, or 50 mass% or less, with respect to the total amount of the coating agent for a battery member. The content of the polymer in the coating agent for a battery member may be 4 vol% or more, 10 vol% or more, 20 vol% or more, or 30 vol% or more, with respect to the total amount of the coating agent for a battery member. In addition, the content of the polymer in the coating agent for a battery member may be 90 vol% or less, 80 vol% or less, 60 vol% or less, or 50 vol% or less, with respect to the total amount of the coating material for a battery member.

In addition, for example, when the coating agent for a battery member contains an ion conductive inorganic solid electrolyte, the content of the polymer in the coating agent for a battery member may be 1 to 30 mass%, 2 to 25 mass%, or 4 to 20 mass%, with respect to the total amount of the coating agent for a battery member. In addition, for example, when the coating agent for a battery member contains an ion conductive inorganic solid electrolyte, the content of the polymer in the coating agent for a battery member may be 1 to 50 vol%, 5 to 40 vol%, or 10 to 35 vol%.

The coating agent for a battery member may contain a metal salt in addition to the polymer. The metal salt may be at least one of an alkali metal salt and an alkaline earth metal salt, or may be an alkali metal salt. The alkali metal salt is not particularly limited, and examples thereof include MF, MCl, MBr, MI, MClO₄, MPF₆, MBF₄, M₂SO₄, M[(CₕF₂ₕ₊₁)SO₃] (h is 0 to 3), and M[(CₕF₂ₕ₊₁)SO₂]₂N (h is 0 to 3), where M is the alkali metal. When the polymer contains a structural unit (A), M may be the same alkali metal element as the alkali metal element of the structural unit (A). M may be lithium, sodium, or potassium, or may be lithium. In addition, when the polymer contains the functional group (B), the coating agent for a battery member may contain an alkali metal salt.

The coating agent for a battery member may be a composite further containing other resins such as a fluorine-based resin, a fabric such as a nonwoven fabric, a porous material, a viscosity adjusting material, and the like. Examples of the other resins include fluorine-based resins. The fluorine-based resin is preferably a resin having a carbon chain as a main chain. The carbon chain may be formed by radical polymerization of an ethylenically unsaturated group. Examples of the fluorine-based resin include poly(vinylidene fluoride-co-hexafluoropropylene) (PVDF-HFP), polyvinylidene fluoride (PVDF), and polytetrafluoroethylene (PTFE), and a content of the other resins in the coating agent for a battery member may be 30 mass% or less, 0.1 to 20 mass%, 1 to 15 mass%, or 1 to 10 mass%, with respect to the total amount of the coating agent for a battery member. In addition, the content of the coating material for a battery member or the other resins in the coating agent for a battery member may be 1 to 200 parts by mass, 3 to 100 parts by mass, 5 to 80 parts by mass, or 10 to 60 parts by mass, with respect to 100 parts by mass of the polymer.

The total amount of the ion conductive inorganic solid electrolyte, the polymer having the ability to preferentially conduct metal ions, and the swelling agent in the coating agent for a battery member may be 70 mass% or more, 80 mass% or more, 90 mass% or more, 95 mass% or more, 97 mass% or more, 99.9 mass% or less, or 99 mass% or less, with respect to the total amount of the coating agent for a battery member. In addition, the total amount of the ion conductive inorganic solid electrolyte, the polymer having the ability to preferentially conduct metal ions, and the swelling agent in the coating agent for a battery member may be 70 to 99.9 mass% or 80 to 99 mass% with respect to the total amount of the coating agent for a battery member.

The total amount of the ion conductive inorganic solid electrolyte, the polymer having the ability to preferentially conduct metal ions, and the swelling agent in the coating agent for a battery member may be 70 vol% or more, 80 vol% or more, 90 vol% or more, 95 vol% or more, 97 vol% or more, 99.9 vol% or less, or 99 vol% or less, with respect to the total amount of the coating agent for a battery member. In addition, the total amount of the ion conductive inorganic solid electrolyte, the polymer having the ability to preferentially conduct metal ions, and the swelling agent in the coating agent for a battery member may be 70 to 99.9 vol% or 80 to 99 vol% with respect to the total amount of the coating agent for a battery member.

The method for producing the polymer is not particularly limited, and examples thereof include a method of polymerizing a monomer (monomer mixture) including at least one of a monomer containing an alkali metal ionized anionic functional group or a monomer containing a precursor of the anionic functional group (hereinafter, referred to as a monomer (A')), and a monomer containing a functional group having a function as an anion receptor (B'). The monomer may further include a monomer (C') different from the monomer (A') and the monomer (B').

The monomer (A') and the monomer (B') may have an ethylenically unsaturated group. In this case, the monomer (A') and the monomer (B') can be polymerized by radical addition polymerization. In this case, the monomer can be polymerized in the presence of an initiator. That is, the polymerization reaction may be performed in a polymerizable composition containing a monomer and an initiator.

The monomer (A') is a monomer from which the structural unit (A) is derived in the polymer. Examples of the monomer (A') include a monomer (A1') represented by the following formula (A1') and a monomer (A2') represented by the following formula (A2'). 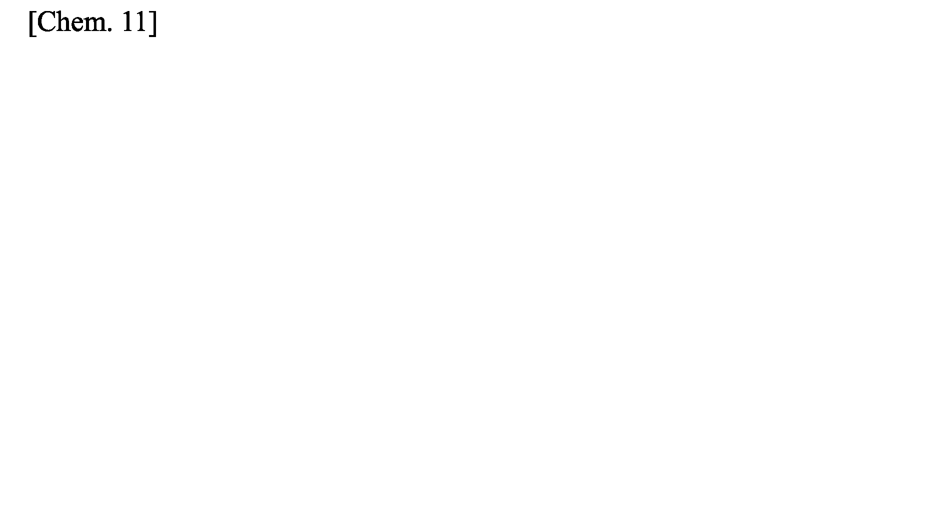 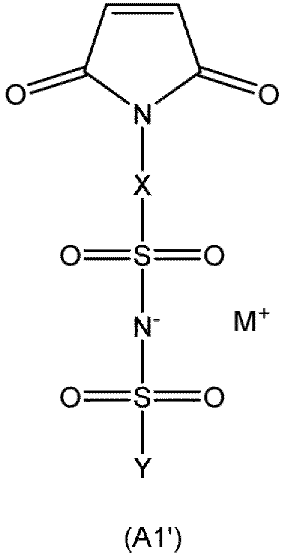 (X, Y, and M⁺ in formula (A1') have the same meanings as in formula (A1).) 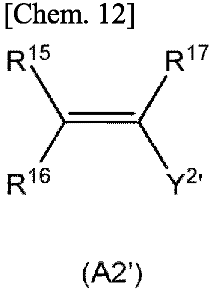 (In formula (A2'), R¹⁵ to R¹⁷ have the same meanings as R¹⁵ to R¹⁷ in formula (A2), and Y2' is a group having a group capable of inducing a phenolic hydroxyl group corresponding to a -OM group of Y² in formula (A2) or a group capable of inducing a sulfonic acid group corresponding to a -SO₃M group of Y².)

Y²' may be the same group as Y², and may be a group that is a precursor of Y². That is, Y²' is a group having a group convertible to a -OM group or an -SO₃M group at the same position as the -OM group or the -SO₃M group of Y² to be obtained.

Examples of the group capable of inducing a phenolic hydroxyl group corresponding to the -OM group of Y² include a hydrolyzable group, and a phenolic hydroxyl group can be introduced at a position corresponding to the -OM group of Y² by hydrolyzing the hydrolyzable group. Examples of the hydrolyzable group include an alkoxide group and a -OSi(R^{k})₃ group (R^{k} is a monovalent organic group such as a hydrocarbon group). The phenolic hydroxyl group can be converted into a -OM group by reacting with, for example, a basic salt of an alkali metal such as MOH, M₂CO₃, or MHCO₃.

Similarly, examples of the group capable of inducing a sulfonic acid group corresponding to the -SO₃M group of Y² include groups capable of inducing a sulfonic acid group (-SO₃H) such as a sulfonic acid ester group and a -SO₂Cl group. The sulfonic acid group can be converted into a -OM group by, for example, reacting with a salt of an alkali metal such as MOH, M₂CO₃, MHCO₃, or an alkali metal halide. In addition, the -SO₂Cl group can also be reacted with MOH to be converted into a -SO₃M group. When an excess amount of MOH is used, most -SO₂Cl groups can also be converted to -SO₃M groups. In such a reaction, some -SO₂Cl groups may be -SO₃H group, and the -SO₃H group may be reacted with a base containing M separately to form a -SO₃M group. In addition, Y²' may be a group having the same anion moiety as Y² and forming a salt with a cation other than an alkali metal ion. In this case, the structural unit (A2) can be derived by subjecting the obtained polymer to a cation exchange reaction. A reaction rate of Y²' (a proportion of Y²' converted to Y² in the total amount of Y²') may be 85 mol% or more, 90 mol% or more, or 95 mol% or more.

The monomer (B') is a monomer from which the structural unit (B) is derived in the polymer. Examples of the monomer (B') include a monomer (B') represented by the following formula (B'). 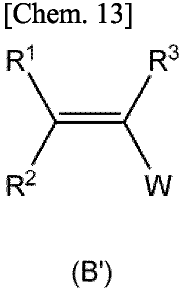 (In the formula, R¹ to R³ and W have the same meanings as R¹ to R³ and W in formula (B).)

The radical polymerization initiator may be either a thermal initiator or a photoinitiator. For example, examples of the thermal initiator include 2,2-azobis (isobutyronitrile)(AIBN); an azo-based initiator such as 2,2-azobis(2-methylbutyronitrile) (AMBN), 2,2-azobis(2,4-dimethylvaleronitrile) (ADVN), 1,1-azobis(1-cyclohexanecarbonitrile) (ACHN, V-40), or dimethyl-2,2-azobisisobutyrate (MAIB); and an organic peroxide such as dibenzoyl peroxide, di-8,5,5-trimethylhexanoyl peroxide, dilauroyl peroxide, didecanoyl peroxide, or di(2,4-dichlorobenzoyl)peroxide. Examples of the photoinitiator include an oxime-based compound, a metallocene-based compound, an acylphosphine-based compound, and an aminoacetophenone compound. One or two or more initiators may be used.

### [Ion Conductive Inorganic Solid Electrolyte]

The ion conductive inorganic solid electrolyte is not particularly limited, and may be an oxide (oxide-based solid electrolyte), a sulfide (sulfide-based solid electrolyte), a hydride (hydride-based solid electrolyte), a halide (halide-based solid electrolyte), or the like. The ion conductive inorganic solid electrolyte may contain at least one of an alkali metal element and an alkaline earth metal element, and may contain an alkali metal element.

### (Oxide-based Solid Electrolyte)

Examples of the oxide-based solid electrolyte include an oxide such as a perovskite-type oxide, a NASICON-type oxide, a LISICON-type oxide, or a garnet-type oxide, and an oxide obtained by doping the oxide with other cations or anions.

Examples of the perovskite-type oxide include Li-La-Ti-based oxide such as LiₐLa₁₋ₐTiO₃ (0 < a < 1), Li-La-Ta-based oxide such as Li_{b}La_{1-b}TaO₃ (0 < b < 1), and Li-La-Nb-based oxide such as Li_{c}La_{1-c}NbO₃ (0 < c < 1).

Examples of the NASICON-type oxide include Li_{1+d}Al_{d}Ti_{2-d}(PO₄)₃ (0 ≤ d ≤ 1). The NASICON-type oxide is an oxide represented by LiₘM¹ₙM²ₒPₚO_{q} (in the formula, M¹ is one or more elements selected from the group consisting of B, Al, Ga, In, C, Si, Ge, Sn, Sb, and Se, M² is one or more elements selected from the group consisting of Ti, Zr, Ge, In, Ga, Sn, and Al, and m, n, o, p, and q are any positive numbers), and examples thereof include Li_{1+x+y}Alₓ(Ti,Ge)₂₋ₓSi_{y}P_{3-y}O₁₂ (0 < x < 2, 0 < y < 3) (LATP).

Examples of the LISICON-type oxide include an oxide represented by Li₄M³O₄-Li₃M⁴O₄ (M³ represents one or more elements selected from the group consisting of Si, Ge, and Ti, and M⁴ represents one or more elements selected from the group consisting of P, As, and V).

Examples of the garnet-type oxide include Li-La-Zr-based oxide such as Li₇La₃Zr₂O₁₂ (LLZ) or Li₇₋ₐ₂La₃Zr₂₋ₐ₂Taₐ₂O₁₂ (LLZT, 0 < a2 < 1, 0.1 < a2 < 0.8, 0.2 < a2 < 0.6).

The oxide-based solid electrolyte may be a crystalline material or an amorphous material.

Examples of the oxide-based solid electrolyte include Li_{6.6}La₃Zr_{1.6}Ta_{0.4}O₁₂ and Li_{0.33}La_{0.55}TiO₃.

### (Sulfide-based Solid Electrolyte)

Examples of the sulfide-based solid electrolyte include a Li₂S-P₂S₅-based compound, a Li₂S-SiS₂-based compound, a Li₂S-GeS₂-based compound, a Li₂S-B₂S₃-based compound, a Li₂S-P₂S₃-based compound, LiI-Si₂S-P₂S₅, LiI-Li₂S-P₂O₅, LiI-Li₃PO₄-P₂S₅, and Li₁₀GeP₂S₁₂.

Note that, in the present specification, the expression "-based compound" indicating a sulfide-based solid electrolyte is used as a generic term for solid electrolytes mainly containing raw materials such as "Li₂S" and "P₂S₅" described before "-based compound". For example, the Li₂S-P₂S₅-based compound includes a solid electrolyte containing Li₂S and P₂S₅ and further containing other raw materials. In addition, the Li₂S-P₂S₅-based compound also includes a solid electrolyte in which a mixing ratio of Li₂S and P₂S₅ is different.

Examples of the Li₂S-P₂S₅-based compound include Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-Lil, and Li₂S-P₂S₅-ZₘSₙ (m and n are positive numbers, and Z is Ge, Zn or Ga).

Examples of the Li₂S-SiS₂-based compound include Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-SiS₂-Li₃PO₄, Li₂S-SiS₂-Li₂SO₄, and Li₂S-SiS₂-LiₓMO_{y} (x and y are positive numbers, and M is P, Si, Ge, B, Al, Ga, or In).

Examples of the Li₂S-GeS₂-based compound include Li₂S-GeS₂ and Li₂S-GeS₂-P₂S₅.

The sulfide-based solid electrolyte may be a crystalline material or an amorphous material.

### (Hydride-based Solid Electrolyte)

Examples of the hydride-based solid electrolyte material include LiBH₄, LiBH₄-3KI, LiBH₄-PI₂, LiBH₄-P₂S₅, LiBH₄-LiNH₂, 3LiBH₄-LiI, LiNH₂, Li₂AlH₆, Li(NH₂)₂I, Li₂NH, LiGd(BH₄)₃Cl, Li₂(BH₄)(NH₂), Li₃(NH₂)I, and Li₄(BH₄)(NH₂)₃.

### (Halide-based Solid Electrolyte)

Examples of the halide solid electrolyte include a compound containing Li, a metal element, and a halogen element.

The halide-based solid electrolyte may be a crystalline material or an amorphous material.

Examples of the ion conductive inorganic solid electrolyte include compounds in which a part or all of Li of the compounds listed as specific examples of the oxide-based solid electrolyte, the sulfide-based solid electrolyte, the hydride-based solid electrolyte, or the halide-based solid electrolyte is substituted with Na, K, Rb, or Cs.

When the electrochemical resistance of the ion conductive inorganic solid electrolyte is not sufficient, the coating effect by the coating material for a battery member of the present embodiment is particularly useful. Examples of such an ion conductive inorganic solid electrolyte include an electrolyte containing a reducing metal oxide element. Examples of such an ion conductive inorganic solid electrolyte include an electrolyte that reacts in a potential range of -0.1 to 4.5 V based on Li/Li⁺.

As the ion conductive inorganic solid electrolyte, the perovskite-type oxide, the NASICON-type oxide, and the LISICON-type oxide tend to be inferior in electrochemical resistance, and therefore, the effect of the coating material for a battery member can be more effectively exhibited.

A content of the ion conductive inorganic solid electrolyte may be 50 mass% or more, 55 mass% or more, 60 mass% or more, 65 mass% or more, or 70 mass% or more, with respect to the total amount of the coating agent for a battery member. In addition, the content of the ion conductive inorganic solid electrolyte may be 95 mass% or less, 90 mass% or less, or 85 mass% or less, with respect to the total amount of the coating agent for a battery member. In addition, the content of the ion conductive inorganic solid electrolyte may be 50 to 95 mass%, 55 to 90 mass%, or 60 to 85 mass%, with respect to the total amount of the coating agent for a battery member. The content of the ion conductive inorganic solid electrolyte may be the amount of the ion conductive inorganic solid electrolyte coated on the coating material for a battery member formed of the coating agent for a battery member.

The content of the ion conductive inorganic solid electrolyte may be 15 vol% or more, 25 vol% or more, 35 vol% or more, 40 vol% or more, 45 vol% or more, or 50 vol% or more, with respect to the total amount of the coating agent for a battery member. In addition, the content of the ion conductive inorganic solid electrolyte may be 90 vol% or less, 80 vol% or less, 70 vol% or less, or 60 vol% or less, with respect to the total amount of the coating agent for a battery member. In addition, the content of the ion conductive inorganic solid electrolyte may be 15 to 90 vol%, 25 to 80 vol%, or 35 to 60 vol%, with respect to the total amount of the coating agent for a battery member. The content of the ion conductive inorganic solid electrolyte may be the content of the ion conductive inorganic solid electrolyte in the layer formed of the coating agent for a battery member.

The ion conductive inorganic solid electrolyte may be an electrolyte in which a particle surface is treated. Specific examples of the treatment include a treatment of removing a surface non-conductive layer with an acid, and a treatment of forming a covalent bond with an atom. The acid is not particularly limited, and examples thereof include hydrochloric acid, nitric acid, and phosphoric acid.

### [Swelling Agent]

The coating agent for a battery member of the present embodiment may contain a swelling agent. Examples of the swelling agent include an organic solvent and an ionic liquid. The coating material for a battery member formed of such a coating agent for a battery member may contain a swelling agent.

### (Ionic Liquid)

The ionic liquid is not particularly limited, and may be, for example, an ionic liquid that can be used for applications such as a battery. Specific examples thereof include an imidazolium salt, a pyrrolidinium salt, a piperidinium salt, a pyridinium salt, a quaternary ammonium salt, and a quaternary phosphonium salt. The coating agent for a battery member of the present embodiment may contain one or two or more ionic liquids. An anion of the ionic liquid is not particularly limited, and examples thereof include Cl⁻, Br, I⁻, ClO₄, PF₆⁻, BF₄⁻, CF₃SO₃⁻, (FSO₂)₂N⁻, (CF₃SO₂)₂N⁻, (CᵣF₂ᵣ₊₁SO₂)₂N⁻ (r is an integer of 2 or more), and HSO₃⁻. From the viewpoint of electrochemical stability, PF₆⁻, BF₄⁻, CF₃SO₃⁻, (FSO₂)₂N⁻, (CF₃SO₂)₂N⁻, or (CₘF₂ₘ₊₁SO₂)₂N⁻ is preferable, and (CF₃SO₂)₂N⁻ is more preferable. The ionic liquid may be a liquid at 25°C.

Examples of a pyrrolidinium cation of the pyrrolidinium salt include the following.

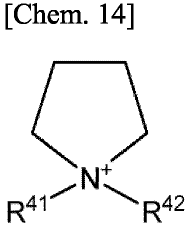

In the formula, R⁴¹ and R⁴² are each independently a monovalent organic group, and the organic group preferably has 1 to 15 carbon atoms. The monovalent organic group is an alkyl group having 1 to 15 carbon atoms such as a butyl group, or a group represented by a formula: -A¹-O-(A²-O)ₖ-A³ (A¹ is an alkylene group having 1 or 2 carbon atoms, A² is an alkylene group having 2 or 3 carbon atoms, A³ is an alkyl group having 1 to 3 carbon atoms, and k is 0 to 3).

The group represented by a formula: -A¹-O-(A²-O)ₖ-A³ is preferably a group having 1 to 10 carbon atoms, and more preferably a - CH₃OCH₂CH₂OCH₃ group or -CH₂CH₂-O-CH₃. R⁴¹ is an alkyl group having 1 to 3 carbon atoms and may be a methyl group. R⁴¹ and R⁴² may be the same or different. Note that the hydrogen bonded to the carbon atom constituting the pyrrolidine ring may be substituted with a substituent.

Examples of a piperidinium cation of the piperidinium salt include the following.

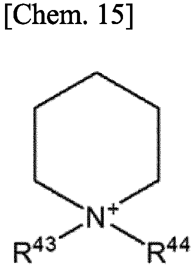

In the formula, R⁴³ and R⁴⁴ are each independently a monovalent organic group, and the organic group preferably has 1 to 15 carbon atoms. The monovalent organic group is an alkyl group having 1 to 15 carbon atoms, or a group represented by a formula: -A¹-O-(A²-O)ₖ-A³ (A¹ is an alkylene group having 1 or 2 carbon atoms, A² is an alkylene group having 2 or 3 carbon atoms, A³ is an alkyl group having 1 to 3 carbon atoms, and k is 0 to 3).

The alkyl group of R⁴⁴ is more preferably an alkyl group having 2 to 6 carbon atoms such as a butyl group. The group represented by a formula: -A¹-O-(A²-O)ₖ-A³ is preferably a group having 1 to 10 carbon atoms, and more preferably a -CH₃OCH₂CH₂OCH₃ group or -CH₂CH₂-O-CH₃. R⁴³ is an alkyl group having 1 to 3 carbon atoms and may be a methyl group. R⁴³ and R⁴⁴ may be the same or different. Note that the hydrogen bonded to the carbon atom constituting the piperidine ring may be substituted with a substituent.

Examples of an imidazolium cation of the imidazolium salt include the following.

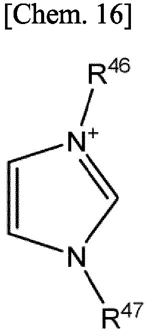

In the formula, R⁴⁶ and R⁴⁷ are each independently a monovalent organic group, and the organic group preferably has 1 to 15 carbon atoms. The monovalent organic group is an alkyl group having 1 to 15 carbon atoms, or a group represented by a formula: -A¹-O-(A²-O)ₖ-A³ (A¹ is an alkylene group having 1 or 2 carbon atoms, A² is an alkylene group having 2 or 3 carbon atoms, A³ is an alkyl group having 1 to 3 carbon atoms, and k is 0 to 3).

The alkyl group of R⁴⁷ is preferably an alkyl group having 2 to 6 carbon atoms such as a butyl group. The group represented by a formula: -A¹-O-(A²-O)ₖ-A³ is preferably a group having 1 to 10 carbon atoms, and more preferably a -CH₃OCH₂CH₂OCH₃ group or -CH₂CH₂-O-CH₃. R⁴⁶ is an alkyl group having 1 to 3 carbon atoms and may be a methyl group. R⁴⁶ and R⁴⁷ may be the same or different. Note that the hydrogen bonded to the carbon atom constituting the imidazole ring may be substituted with a substituent.

Examples of an ammonium cation of the quaternary ammonium salt include the following.

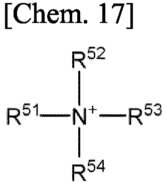

In the formula, R⁵¹ to R⁵⁴ are each independently a monovalent organic group, and the organic group preferably has 1 to 15 carbon atoms. The monovalent organic group is preferably an alkyl group having 1 to 15 carbon atoms, or a group represented by a formula: -A¹-O-(A²-O)ₖ-A³ (A¹ is an alkylene group having 1 or 2 carbon atoms, A² is an alkylene group having 2 or 3 carbon atoms, A³ is an alkyl group having 1 to 3 carbon atoms, and k is 0 to 3). R⁵¹ to R⁵⁴ may all be the same, and may be two or more different groups. For example, it is preferable that R⁵¹ is an alkyl group having 1 to 10 carbon atoms and each of R⁵² to R⁵⁴ is an alkyl group having 1 to 3 carbon atoms, and it is more preferable that R⁵¹ is an alkyl group having 3 to 8 carbon atoms such as a butyl group and each of R¹² to R⁵⁴ is a methyl group or an ethyl group. The group represented by a formula: -A¹-O-(A²-O)ₖ-A³ is preferably a group having 1 to 10 carbon atoms, and more preferably a -CH₃OCH₂CH₂OCH₃ group or -CH₂CH₂-O-CH₃.

Examples of a phosphonium cation of the quaternary phosphonium salt include the following.

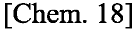

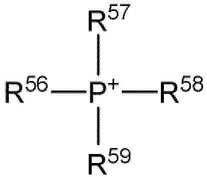

In the formula, R⁵⁶ to R⁵⁹ are each independently a monovalent organic group, and the organic group preferably has 1 to 15 carbon atoms. The monovalent organic group is preferably an alkyl group having 1 to 15 carbon atoms, or a group represented by a formula: -A¹-O-(A²-O)ₖ-A³ (A¹ is an alkylene group having 1 or 2 carbon atoms, A² is an alkylene group having 2 or 3 carbon atoms, A³ is an alkyl group having 1 to 3 carbon atoms, and k is 0 to 3). R⁵⁶ to R⁵⁹ may all be the same, and may be two or more different groups. For example, it is preferable that R⁵⁶ is an alkyl group having 1 to 10 carbon atoms and each of R¹⁷ to R⁵⁹ is an alkyl group having 1 to 3 carbon atoms, and it is more preferable that R⁵⁶ is an alkyl group having 3 to 8 carbon atoms such as a pentyl group and each of R⁵⁷ to R⁵⁹ is a methyl group or an ethyl group.

Specific examples of the ionic liquid include 1-(2-methoxyethoxymethyl)-1-methylpyrrolidinium bis(trifluoromethylsulfonyl)imide, 1-ethyl-3-methylimidazolium bis(trifluoromethylsulfonyl)imide, 1-ethyl-3-methylimidazolium tetrafluoroborate, 1-n-butyl-1-methylpyrrolidinium bis(fluorosulfonyl)imide, 1-n-butyl-1-methylpyrrolidinium trifluoromethanesulfonate, 1-n-butyl-1-methylpyrrolidinium bis(trifluoromethylsulfonyl)imide, triethyl-n-pentylphosphonium bis(trifluoromethylsulfonyl)imide, and n-butyltrimethylammonium bis(trifluoromethylsulfonyl)imide.

A content of the ionic liquid may be 5 to 45 vol%, 10 to 40 vol%, or 20 to 35 vol%, with respect to the total amount of the coating agent for a battery member.

### [Organic Solvent]

The organic solvent may be an aprotic solvent, and may be, for example, at least one selected from the group consisting of a carbonate-based solvent, a fluorine-based solvent, and an ether-based solvent.

Examples of the carbonate-based solvent include linear carbonates such as dimethyl carbonate, diethyl carbonate, and ethyl methyl carbonate; and cyclic carbonates such as ethylene carbonate, propylene carbonate, butylene carbonate, and vinylene carbonate. Examples of the ether-based solvent include cyclic ethers such as tetrahydrofuran, 2-methyltetrahydrofuran, tetrahydropyran, and 1,3-dioxolane; and linear ethers such as 1,2-diethoxyethane and ethoxymethoxyethane. Examples of the fluorine-based solvent include hydrofluorocarbons such as perfluorooctane; hydrofluoroethers such as methyl nonafluorobutyl ether and ethyl nonafluorobutyl ether, and hydrofluoroolefins such as 1,3,3,3-tetrafluoropropene. In addition, examples of the solvent include dimethyl sulfoxide (DMSO); and aprotic solvents such as amide-based solvents such as dimethylformamide (DMF) and dimethylacetamide (DMA). The organic solvents may be used alone or as a mixed solvent including two or more organic solvents.

When a mixed solvent is used, for example, the organic solvent may be a mixed solvent including two or more carbonate-based solvents, may be a mixed solvent including two or more cyclic carbonates, or may be a mixed solvent containing ethylene carbonate and propylene carbonate.

A content of the swelling agent may be 5 mass% or more, 10 mass% or more, 20 mass% or more, 30 mass% or more, or 40 mass% or more, with respect to the total amount of the coating agent for a battery member. In addition, the content of the swelling agent may be 90 mass% or less, 85 mass% or less, or 80 mass% or less, with respect to the total amount of the coating agent for a battery member.

The content of the swelling agent may be 5 vol% or more, 10 vol% or more, 20 vol% or more, 30 vol% or more, 40 vol% or more, or 50 vol% or more, with respect to the total amount of the coating agent for a battery member. In addition, the content of the swelling agent may be 90 vol% or less, 80 vol% or less, 70 vol% or less, or 60 vol% or less, with respect to the total amount of the coating agent for a battery member.

A mass ratio of the polymer and the swelling agent in the coating agent for a battery member or the coating material for a battery member may be 1:0.1 to 1:4, 1:0.3 to 1:3.5, 1:0.5 to 1:3, or 1:1 to 1:2.5. In the coating material for a battery member or the coating agent for a battery member, the polymer may be swollen by the swelling agent. The coating material for a battery member may be in a gel state.

The content of the swelling agent may be 30 to 90 mass% or 50 to 84 mass% with respect to the total amount of the coating agent for a battery member when the content of the ion conductive inorganic solid electrolyte in the coating agent for a battery member is less than 5 mass%.

The content of the swelling agent may be 3 to 70 mass%, 5 to 50 mass%, or 7 to 30 mass%, with respect to the total amount of the coating material for a battery member when the content of the ion conductive inorganic solid electrolyte in the coating agent for a battery member is 5 mass% or more.

It is preferable that the coating agent for a battery member of the present embodiment is stabilized in a potential range of -0.1 to 4.5 V based on Li/Li⁺. Note that the stabilization means that the reaction rate of the electrochemical reaction occurring in either the electrolyte or the electrode is reduced or the reaction does not occur as compared with the case where there is no coating material for a battery member.

The coating material for a battery member of the present embodiment can be used as a constituent material of an electrochemical device such as a capacitor or a battery, and for example, can be used as a material of an electrolyte of a battery. In particular, when the coating material for a battery member contains an ion conductive inorganic solid electrolyte, it can also be used as an electrolyte composition for forming an electrolyte. The electrolyte may be formed by pressure-molding the electrolyte composition. That is, the electrolyte of the present embodiment includes the coating material for a battery member of the present embodiment. Examples of the battery include batteries that perform charge and discharge by movement of alkali metal ions, such as a lithium ion battery and a sodium ion battery. The battery may be a primary battery or a secondary battery, and the electrolyte composition of the present embodiment which may be an all-solid battery may be a non-liquid electrolyte composition such as a solid electrolyte composition.

The battery of the present embodiment includes a positive electrode, a negative electrode, and an electrolyte disposed between the positive electrode and the negative electrode. The electrolyte may contain the coating material of the present embodiment. Examples of the form of the coating material include (1) a form in which individual particles of the ion conductive inorganic solid electrolyte contained in the electrolyte are coated, (2) a form in which a coating material (which may be a coating layer) is formed on a surface of at least one of a negative electrode and a positive electrode and an electrolyte is formed on the coating material, and (3) a form (coated electrolyte) including an electrolyte and a coating material for a battery member (which may be a coating layer) coating at least a part of a surface of the electrolyte. In the case of (2), the coating material may be formed on the surface of the negative electrode. In addition, in the case of (2), the electrolyte may have a sheet shape. In the case of (3), the coating material may be formed on both sides of the electrolyte. In the case of (3), an electrode may be formed on the coating material. In (3), when the electrolyte is in the form of a sheet, a layer of the coating material may be formed on a part or the entire surface of at least one main surface, or a layer of the coating material may be formed on a part or a front surface of both main surfaces. When the layer of the coating material is formed only on one main surface, a negative electrode may be formed on the coating material.

For example, in a case of a lithium ion battery, a positive electrode is not particularly limited, and may contain a positive electrode active material, and may contain a conductive auxiliary agent, a binder, and the like, if necessary.

The positive electrode may be formed by forming a layer containing these materials on a current collector. Examples of the positive electrode active material include a lithium-containing composite metal oxide containing lithium (Li) and at least one transition metal selected from the group consisting of V, Cr, Mn, Fe, Co, Ni, Cu, and Al. Examples of such a lithium composite metal oxide include LiCoO₂, LiNiO₂, LiMn₂O₄, Li₂MnO₃, LiNiₓMn_{y}Co_{1-x-yO2} [0<x+y<1], LiNiₓCo_{y}Al_{1-x-y}O₂ [0<x+y<1], LiCr_{0.5}Mn_{0.5}O₂, LiFePO₄, Li₂FeP₂O₇, LiMnPO₄, LiFeBO₃, Li₃V₂(PO₄)₃, Li₂CuO₂, Li₂FeSiO₄, and Li₂MnSiO₄.

The lithium ion battery may include a separator. The separator may be a porous material or a resin porous material. Specific examples thereof include a porous polyolefin membrane and a porous ceramic membrane.

The negative electrode of the lithium ion battery is not particularly limited, and may contain a negative electrode active material, and may contain a conductive auxiliary agent, a binder, and the like, if necessary. Examples thereof include a simple substance of an element such as Li, Si, P, Sn, Si-Mn, Si-Co, Si-Ni, In, or Au, an alloy or a composite containing these elements, a carbon material such as graphite, and a substance in which lithium ions are inserted between layers of the carbon material.

A method for preparing a coating agent for a battery member is not particularly limited as long as it is a method capable of mixing the respective components of the coating agent for a battery member, and examples thereof include a method in which the respective components of the coating agent for a battery member are mixed in a mortar or the like (solid phase method). In addition, when the coating agent for a battery member contains an ionic liquid, a method in which each component of the coating agent for a battery member is dissolved and dispersed in an organic solvent to prepare a precursor composition, and the organic solvent is removed from the precursor composition by drying or the like (liquid phase method) is also exemplified. The organic solvent used in the liquid phase method may be an aprotic solvent, and examples thereof include N-methyl-2-pyrrolidone. The amount of organic solvent used may be 200 to 2,000 parts by mass or 500 to 1,500 parts by mass with respect to 100 parts by mass of the coating agent for a battery member to be prepared. The ion conductive inorganic solid electrolyte may be subjected to an acid treatment before being mixed with other components.

A method for producing a battery of the present embodiment may include, for example, a step of preparing an electrolyte composition (coating agent for a battery member) and a step of pressurizing the electrolyte composition to produce an electrolyte. The produced electrolyte is disposed between a positive electrode and a negative electrode. The pressurization may be performed by disposing the electrolyte composition on the negative electrode or the positive electrode or between the positive electrode and the negative electrode. A pressure at the time of pressurization may be, for example, 10 to 300 MPa or 100 to 250 MPa. The pressurization may be performed at, for example, 10°C to 60°C or 20°C to 50°C. When the coating agent for a battery member contains an organic solvent, the coating agent may be performed at a temperature equal to or lower than a boiling point of the organic solvent (when a plurality of organic solvents are contained, a temperature is equal to or lower than the lowest boiling point of an organic solvent among the contained organic solvents) in order to prevent evaporation of the organic solvent.

### Examples

### [Production of Polymer Having Ability to Preferentially Conduct Metal ions]

A copolymer of a monomer A1 represented by the following formula and styrene (molar ratio: 54:46) was produced as follows.

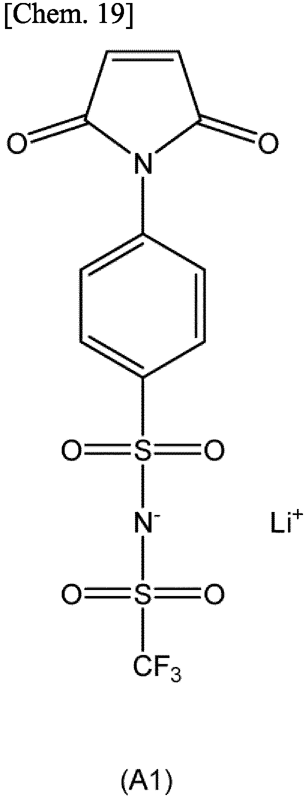

First, the monomer A1 was produced as follows.

### (Synthesis of Monomer A1)

In a nitrogen atmosphere, trifluoromethanesulfonamide (52.5 mmol, 7.83 g, manufactured by Tokyo Chemical Industry Co., Ltd.) was dissolved in dehydrated acetonitrile (150 mL, manufactured by KANTO CHEMICAL CO., INC.). Lithium hydroxide (105 mmol, 2.51 g, manufactured by Tokyo Chemical Industry Co., Ltd.) and 4-acetamidobenzenesulfonyl chloride (50 mmol, 11.68 g, manufactured by Tokyo Chemical Industry Co., Ltd.) were sequentially added to the solution, and the mixture was heated and refluxed for 5 hours. After cooling to room temperature, an excessive amount of acetonitrile (700 mL) was added to precipitate a solid, which was separated by filtration and then washed with dichloromethane (manufactured by KANTO CHEMICAL CO., INC.), thereby obtaining an intermediate 1. The yield was 97.1%.

### · Structural formula of intermediate 1:

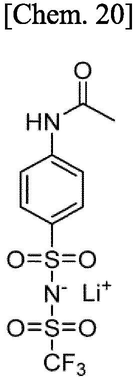

Under a nitrogen atmosphere, 5% hydrochloric acid (22.5 mL) was added to the intermediate 1 (15 mmol, 5.28 g), and the mixture was stirred at 90°C for 2 hours. After cooling to room temperature, an aqueous lithium hydroxide solution was added until the pH reached 7 or higher under the confirmation with a pH test paper or the like, and then a solid was obtained by drying under reduced pressure. The obtained solid was extracted with an acetonitrile solution, and dried under reduced pressure, thereby obtaining an intermediate 2. The yield was 92.6% based on the raw material of the intermediate 1.

### · Structural formula of intermediate 2:

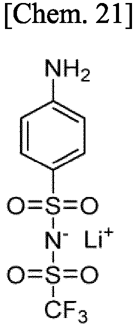

Maleic anhydride (13.3 mmol, 1.30 g, manufactured by Tokyo Chemical Industry Co., Ltd.) was dissolved in dehydrated 1,4-dioxane (manufactured by KANTO CHEMICAL CO., INC.) under a nitrogen atmosphere. The entire amount of a dehydrated tetrahydrofuran (26.4 mL, manufactured by KANTO CHEMICAL CO., INC.) solution of the intermediate 2 (13.2 mmol, 4.09 g) prepared under a nitrogen atmosphere was added dropwise to the solution, and the mixture was stirred at room temperature for 12 hours. After the reaction, a precipitate was filtered and vacuum-dried at 60°C for 4 hours, thereby obtaining a solid containing an intermediate 3.

### · Structural formula of intermediate 3:

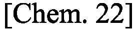

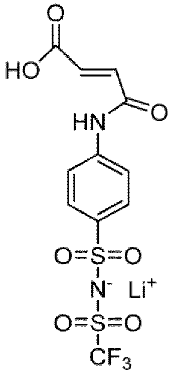

Under a nitrogen atmosphere, a solid containing the intermediate 3 (14.0 mmol, 5.70 g) and an aqueous sodium acetate solution (13.3 mmol, 1.09 g, manufactured by Tokyo Chemical Industry Co., Ltd.) were added to acetic anhydride (12.3 mL, manufactured by Tokyo Chemical Industry Co., Ltd.), and the mixture was stirred at 70°C for 3 hours. The entire amount of the solution after the reaction was added dropwise to an excess amount of diethyl ether (manufactured by KANTO CHEMICAL CO., INC.) at 0°C, and a precipitate was collected by filtration. The precipitate was extracted with dehydrated acetonitrile (manufactured by KANTO CHEMICAL CO., INC.) under an inert atmosphere and dried under reduced pressure, thereby obtaining a monomer A1. The yield throughout the entire process was 72.8%.

3.121 g of the monomer A1, 0.833 g of styrene, and 57.5 mg of AIBN were dissolved in 70 mL of dehydrated acetonitrile, and the mixture was reacted at 60°C for 24 hours under a nitrogen atmosphere while confirming a monomer consumption rate by adding tetralin as an internal standard substance. A polymerization solution was dialyzed in acetonitrile and vacuum-dried at 120°C, thereby obtaining 3.50 g (yield 89%) of a polymer. A monomer introduction ratio was A1:styrene = 54:46. The monomer introduction ratio was calculated from ¹H-NMR of the copolymer. Note that, as styrene, a commercially available reagent having a purity of > 98% manufactured by Aldrich was sealed with CaCl₂ and dried overnight, and CaH₂ was added and distilled under reduced pressure to improve the purity.

In the synthesized polymer, a number average molecular weight Mn was 9.3 × 10⁴, a weight average molecular weight Mw was 3.0 × 10⁵, and a molecular weight distribution Mw/Mn was 3.19.

### [Ion Conductive Inorganic Solid Electrolyte]

Particulate (average particle size: 1 µm) LATP powder: LICGC PW-01 Powder manufactured by Ohara Corporation was used as an ion conductive inorganic solid electrolyte.

### [Method for Preparing Electrolyte Composition]

### (Example 1)

The polymer having the ability to preferentially conduct metal ions produced as described above was mixed with an organic solvent (ethylene carbonate:propylene carbonate = 1:1 (volume ratio)) (Kishida Chemical Co., Ltd.), thereby preparing a gel-like polymer composition. Next, the gel-like polymer composition and the LATP powder were mixed using a mortar so that the content of the LATP powder in the electrolyte composition was 70 mass%, thereby obtaining an electrolyte composition.

### (Example 1')

A pellet molded body having a diameter of 1.5 cm was obtained by mixing the polymer having the ability to preferentially conduct metal ions, produced as described above, in an amount of 16 mass%, LATP powder in an amount of 79 mass%, and polytetrafluoroethylene (PTFE) in an amount of 5 mass%, and press-molding 150 mg of the mixture at a pressure of 200 MPa. An electrolyte composition was obtained by impregnating the pellet molded body with 32 mass% of an organic solvent (ethylene carbonate:propylene carbonate = 1:1 (volume ratio)) (Kishida Chemical Co., Ltd.) based on 100 mass% of the pellet molded body.

### (Example 2)

A coating material 1 for a battery member obtained by adding 200 parts by mass of an organic solvent (ethylene carbonate:propylene carbonate = 1:1 (volume ratio)) (Kishida Chemical Co., Ltd.) to 100 parts by mass of the polymer having the ability to preferentially conduct metal ions produced as described above was disposed on both surfaces of a sheet-like LATP sintered body (1 cm long × 1 cm wide × 90 µm thick), thereby obtaining an electrolyte composition. (Coating material 1 for battery member/LATP sintered body/coating material 1 for battery member)

### (Example 3)

A coating material 2 for a battery member obtained by adding 50 parts by mass of poly(vinylidene fluoride-co-hexafluoropropylene) and 300 parts by mass of an organic solvent (ethylene carbonate:propylene carbonate = 1:1 (volume ratio)) (Kishida Chemical Co., Ltd.) to 100 parts by mass of the polymer having the ability to preferentially conduct metal ions produced as described above was disposed on both surfaces of an LATP sintered body, thereby obtaining an electrolyte composition. (Coating material 2 for battery member/LATP sintered body/coating material 2 for battery member)

### (Comparative Example 1)

LATP sintered body:LICGC sintered body-01 manufactured by Ohara Corporation was used as it was.

### (Cycle Test)

An evaluation cell of a coin-type battery CR2032 was assembled in a dry argon atmosphere in a glove box. Specifically, the respective layers were laminated in the following order in the evaluation cell to prepare a test laminate.

### (Lithium/electrolyte composition/lithium)

The evaluation cell was subjected to a test in which +100 µA/cm² and -100 µA/cm² were caused to flow alternately for 1 hour, and the time until short-circuiting was defined as a cycle life.

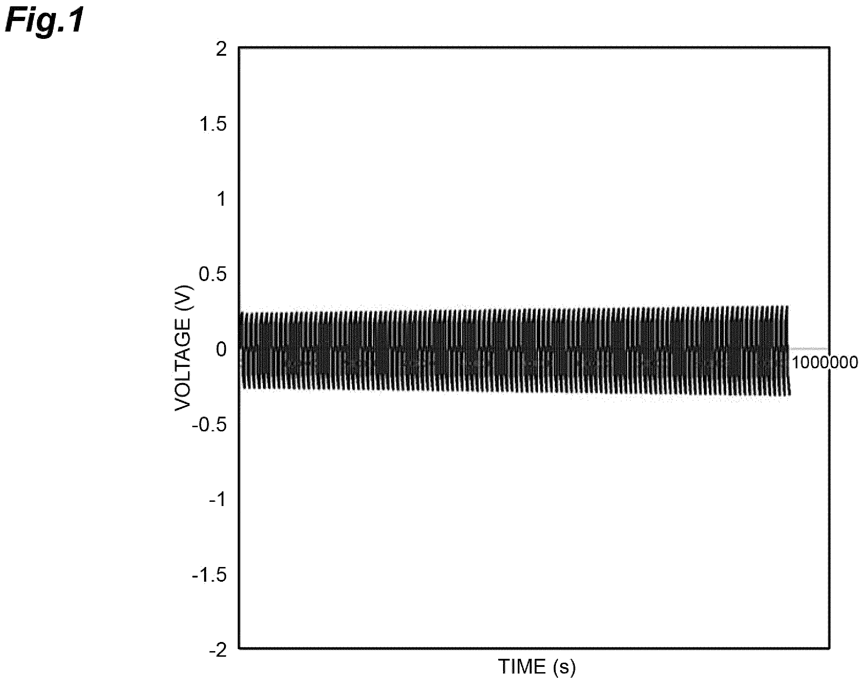

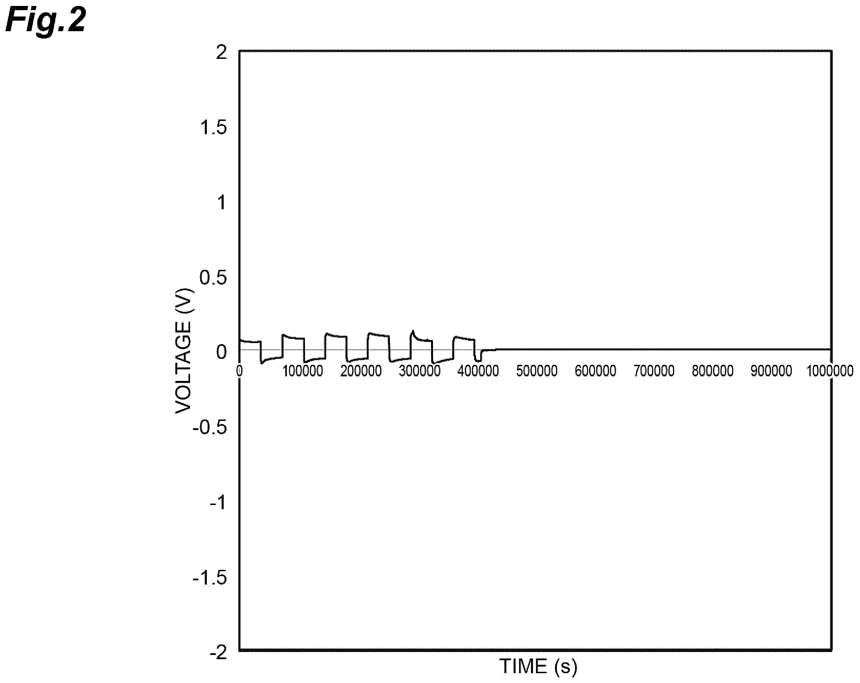

FIG. 1 is a diagram showing a result of a cycle test for a cell using an electrolyte composition of Example 1. As shown in FIG. 1, the cell was stable for 100 cycles or more under the condition of a constant current density of 100 µA/cm². FIG. 2 is a diagram showing a result of a cycle test for a cell using an electrolyte composition of Comparative Example 1. In the case of Comparative Example 1, the cycle life was only 6 cycles. From these experimental results, it is considered that in Comparative Example 1, a short circuit occurred due to the reduction of LATP by lithium, but in Example 1, it is found that the coating material of the present embodiment contributes to improving the reduction resistance of LATP.

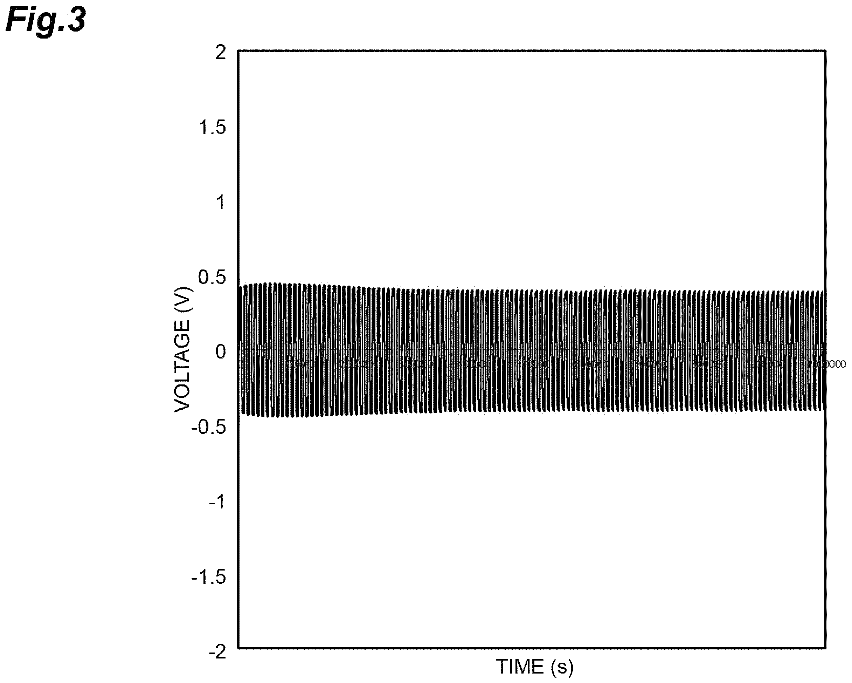

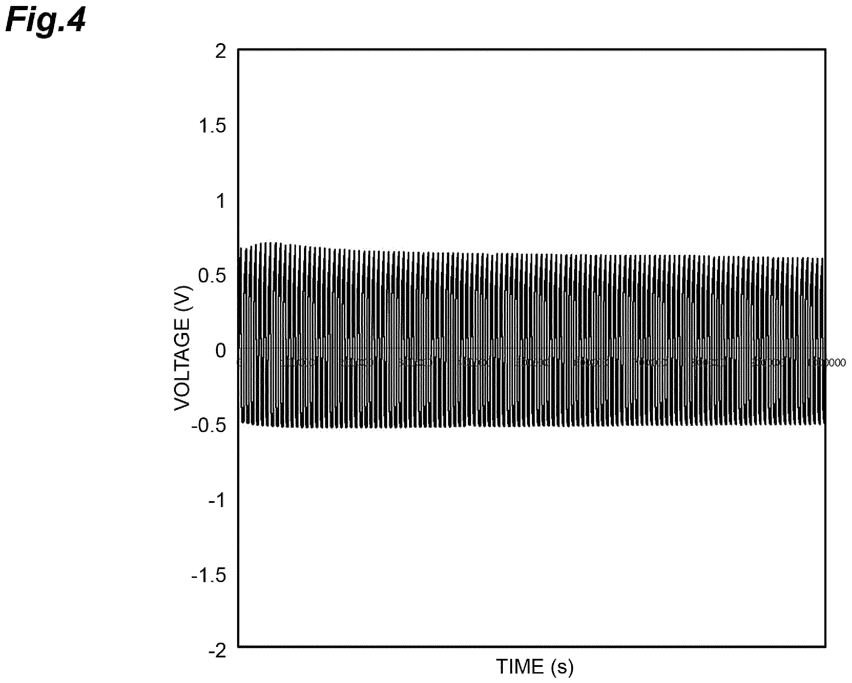

FIG. 3 is a diagram showing a result of a cycle test for a cell using an electrolyte composition of Example 2. FIG. 4 is a diagram showing a result of a cycle test for a cell using an electrolyte composition of Example 3. The cells using the electrolyte compositions of Examples 2 and 3 were also stable for 100 cycles or more under the condition of a constant current density of 100 µA/cm².

The cell using the electrolyte composition of Example 1' was stable for 50 cycles or more as a result of the cycle test.

## Claims

1. A coating material for a battery member comprising a polymer having an ability to preferentially conduct metal ions.

2. The coating material for a battery member according to claim 1, wherein the coating material is for coating an ion conductive inorganic solid electrolyte.

3. The coating material for a battery member according to claim 2, wherein the ion conductive inorganic solid electrolyte reacts in a potential range of -0.1 to 4.5 V based on Li/Li⁺.

4. The coating material for a battery member according to claim 1 or 2, further comprising a swelling agent.

5. The coating material for a battery member according to claim 4, wherein the swelling agent is at least one of an organic solvent and an ionic liquid.

6. The coating material for a battery member according to claim 1 or 2, wherein the polymer contains at least one of an anionic functional group having a metal ion as a counter cation and a functional group having an anion scavenging ability.

7. The coating material for a battery member according to claim 1 or 2, wherein the coating material is stabilized in a potential range of -0.1 to 4.5 V based on Li/Li⁺.

8. The coating material for a battery member according to claim 2, wherein the ion conductive inorganic solid electrolyte is particles.

9. The coating material for a battery member according to claim 2, wherein the ion conductive inorganic solid electrolyte has a sheet shape.

10. An electrolyte comprising the coating material for a battery member according to claim 1 or 2.

11. A coated electrolyte comprising: an electrolyte; and a coating material for a battery member covering at least a part of a surface of the electrolyte, wherein the coating material for a battery member contains a polymer having an ability to preferentially conduct metal ions.

12. A battery comprising the coating material for a battery member according to claim 1 or 2.

13. A coating agent for a battery member comprising a polymer having an ability to preferentially conduct metal ions.
